# EUROPEAN PATENT APPLICATION

(11) **EP 3 188 356 A1**
(43) Date of publication of application: **05.07.2017**
(21) Application number: 15836708.6
(22) Date of filing: 21.07.2015
(51) Int. Cl.: H02M 7/49, H02M 7/487, H02M 7/797

(54) **POWER CONVERSION DEVICE**

(30) Priority: 25.08.2014 JP 2014170804
(71) Applicant: Kabushiki Kaisha Toshiba, Minato-ku Tokyo 105-8001 (JP)
(72) Inventor: HASEGAWA, Ryuta, Tokyo 105-8001 (JP); SUZUKI, Daichi, Tokyo 105-8001 (JP)
(74) Representative: Awapatent AB
(86) International application number: PCT/JP2015/070665
(87) International publication number: WO 2016/031430

(57) **Abstract**

Provided is a power converter capable of keeping a neutral potential constant. The power converter converts power between AC and DC, and includes: capacitors (2a and 2b) that are connected in series, connected in parallel to a DC power supply (20) to generate a neutral potential by dividing an input DC voltage from the DC power supply (20) ; a plurality of legs (3) that are connected in parallel to the DC power supply (20), each including chopper cells (C) that convert the DC to the AC; and a control unit that controls circulating currents to be caused to flow through the legs (3) of respective phases to maintain balances among output voltages from the chopper cells of the legs (3) of the respective phases. The control unit includes a neutral-potential control unit that superimposes a neutral current, for keeping the neutral potential constant, on the DC circulating currents to be caused to flow between DC terminals of each of the phases. The neutral-potential control unit makes the circulating current with the neutral current superimposed thereon to flow in at least one of the first and the second capacitor.

## Description

### FIELD

Embodiments of the present disclosure relate to a power converter that mutually converts power between DC and AC.

### BACKGROUND

In recent years, use of renewable energy, such as a wind power generation, a solar power generation, and a solar-thermal power generation, has been promoted. To sufficiently generate a larger amount of power by the renewable energy, a use of an offshore wind-power generation, and the solar power generation and the solar-thermal power generation in desert regions is considered. With regard to the offshore wind-power generation, it is necessary, to transmit a large amount of generated power to cities where the power is consumed through submarine cables, and to transmit a large amount of power with high efficiency over a long distance from a desert region in Africa or a remote region in China to Europe or large cities in a coastal region. In order to meet such demands, establishment construction of a network for DC power transmission is considered, because a DC power transmission is more efficient than a conventional three-phase AC power transmission, and can be installed at lower costs.

With regard to the DC power transmission, there are needs for power converters such as a converter that converts a generated AC power to DC for the DC power transmission, and an inverter that converts the transmitted DC to AC for cities. A modular multilevel converter (MMC), C which is capable of outputting a voltage waveform close to a sine wave so as not to cause harmonic to flow to the AC system at the time of switching operations by the converter and the inverter, and reducing the number of output filters.

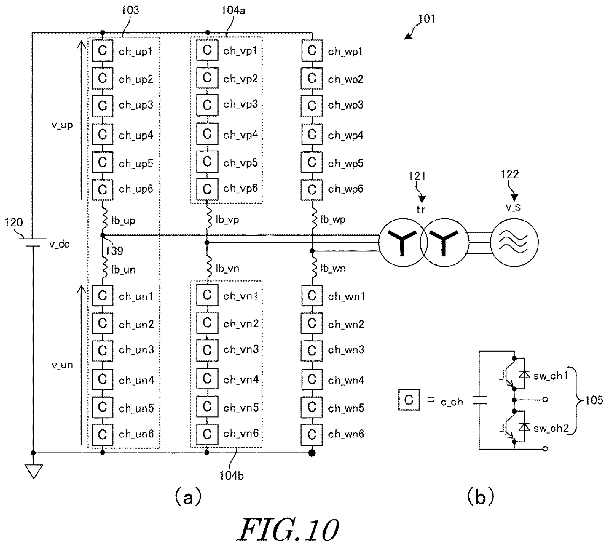

FIG.10 shows an example of the MMC, which is used for conventional DC power transmission. As shown in FIG. 10 (a), an MMC 101 includes U-phase, V-phase, and W-phase legs 103 that are connected in parallel to a DC power supply 120 and generate an AC voltage. The legs 103 are connected to a three-phase transformer 121 that converts the generated AC voltages to a desired AC voltage. The three-phase transformer 121 is connected to a power system 122.

All the legs 103 of the respective phases have the same configuration, and hence the U-phase leg 103 is described. The U-phase leg 103 generates the AC voltage from an input DC voltage, and includes twelve chopper cells C connected in series. That is, the U-phase leg 103 includes a upper arm 104a in which six of the chopper cells C are connected in series on a positive side, and a lower arm 104b in which other six of the chopper cells C are connected in series on a negative side.

An AC output terminal 139 connected to the three-phase transformer 121 is arranged between the upper arm 104a and the lower arm 104b. A reactor lb_up is arranged between the upper arm 104a and the terminal 139, and a reactor lb_un is arranged between the negative lower arm 104b and the terminal 139. As shown in FIG. 10(b), the chopper cell C includes a leg 105 in which two switches sw_ch1, sw_ch2 with self-extinguishing properties are connected in series, and a capacitor c_ch connected in parallel to the leg 105. The chopper cell C uses the capacitor c_ch as a DC power supply, and outputs a voltage v_ch from the capacitor c_ch when the switch sw_ch1 is turned on. Both terminals of the chopper cell C have the same potential when the switch sw_ch2 is turned on. In the U-phase leg 103 in which the chopper cells C are connected in multiple series, the chopper cells C are switched at different timings so as to generate a multi-step AC voltage waveform.

An operation of the MMC 101 is described by way of an example of the U-phase leg 103. A total voltage v_up of positive chopper cells ch_up 1 to 6 is subtracted from an input DC voltage V_dc of the DC power supply 120, and a total voltage v_un of negative chopper cells ch_un 1 to 6 with respect to a reference potential is added. In this way, the AC voltage is obtained. In addition, this AC voltage is converted to the desired AC voltage by the three-phase transformer 121.

Furthermore, the reactors lb_up and lb_un suppress an increase in current due to a short-circuiting between the input DC voltage v_dc and a chopper-cell output voltage v_up+v_un. It is the same for the V-phase leg 103 and the W-phase leg 103.

By the above-described operation, a three-phase AC voltage is generated and then converted to the desired AC voltage by the three-phase transformer 121. The desired AC voltage is supplied to the power system 122.

### Citation List

### Patent Document

Patent Document 1: Japanese Patent Translation Publication 2010-512134
Patent Literature 2: Japanese Patent Application 2013-198389

### BRIEF DESCRIPTION OF DRAWINGS

FIG. 1(a) is a circuit diagram of a power converter according to a first embodiment, and FIG. 1(b) is a circuit diagram of a chopper cell;
FIG. 2 is a block diagram of an internal configuration of a control unit of the power converter according to the first embodiment;
FIG. 3 is a schematic diagram of a control configuration of a neutral-potential control unit;
FIG. 4 is a table showing neutral currents that are superimposed on phases within a single period;
FIG. 5 is a schematic diagram of a control configuration of an inter-arm capacitor-voltage-balance control unit;
FIG. 6 is a schematic chart showing a method of generating chopper-cell-group output-voltage command values;
FIG. 7 is a schematic diagram of a control configuration of a chopper-cell-group output-voltage-command-value generating unit;
FIG. 8 is a schematic diagram of a control configuration of an individual-capacitor-voltage-balance control unit;
FIG. 9 is an explanatory chart showing a method of outputting a voltage from a chopper cell; and
FIG. 10(a) is an explanatory diagram showing a conventional MMC, and FIG. 10(b) is a circuit diagram of a chopper cell therein.

### SUMMARY

In the MMC, a power pulsation equivalent to an AC frequency of the output occurs in principle in the capacitor of the chopper cell. In order to suppress the fluctuation of the capacitor voltage to a constant value, a capacity of the capacitor needs to be increased, and a size of the power converter itself is increased. For example, in a case of DC power transmission of a DC voltage of from several ten kV to several hundred kV, a larger number of chopper cells are arranged, and a capacitor volume increases proportionally. As a result, a volume of the power converter increases.

As a countermeasure, a use of a neutral-point-clamped modular multilevel converter (hereinafter, referred to as "NPC-MMC") in which switches (valves) each including a self-excited switching element such as an IGBT, and diodes reversely connected to the element, and the chopper cells are combined is considered. In the NPC-MMC, an input DC voltage from a DC power supply is divided in half, for example, by two capacitors, and a neutral potential is generated between those capacitors. That is, the two capacitors connected in series are connected in parallel to the input DC voltage, relative to the input DC voltage. The NPC-MMC is capable of reducing the number of the chopper cells without sacrificing the advantages of the MMC, the capability of outputting a stepwise multi-level voltage waveform by operating the chopper cells at different timings, and of causing an output AC voltage to be substantially a sine wave,. Thus, installation space for the power converter may be reduced.

However, the neutral potential is fluctuated due to imbalances in leakage current and in discharge current from the capacitors and the switching devices. Therefore, for example, there is a risk that a balance between the discharge current of the positive capacitor and the negative capacitor is lost, a voltage exceeding a resistance voltage of the switching element is applied to the switching elements, causing malfunctions of the switching elements, resulting in a malfunction of the power converter itself.

The power converter according to the embodiments of the present disclosure is made to solve the problems as described above, and an objective is to provide a power converter capable of keeping a neutral potential constant.

In order to achieve the above-mentioned objective, according to an embodiment of the present disclosure, is a power converter that converts power between AC and DC, the power converter including:
a first capacitor and a second capacitor that are connected in series, connected in parallel to a DC power supply, to generate a neutral potential by dividing an input DC voltage from the DC power supply;
a plurality of legs that are connected in parallel to the DC power supply, each including chopper cells that convert the DC to the AC; and
a control unit that controls a circulating current flowing through the legs of respective phases to maintain balances among output voltages from the chopper cells of the legs of the respective phases,
   in which:
   the control unit includes a neutral-potential control unit that superimposes a neutral current for controlling the neutral potential constant on the DC circulating currents flowing between DC terminals of each of the phases; and
   the neutral-potential control unit makes the circulating current with the neutral current superimposed thereon to flow in at least one of the first and the second capacitor.

### [1. First Embodiment]

### [1-1. Schematic Configuration]

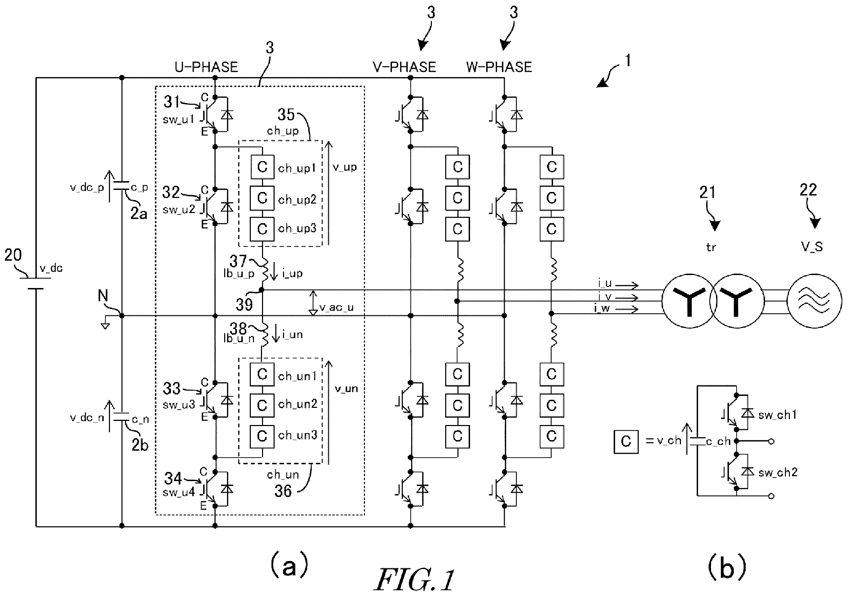

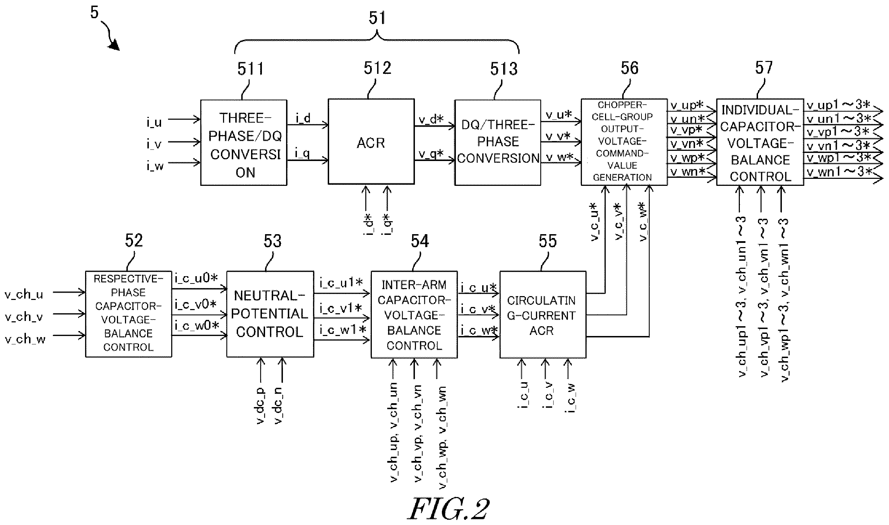

In the following, a power converter of an embodiment of the present disclosure is described with reference to FIG. 1 to FIG. 9. FIGs. 1 are circuit diagrams of the power converter of this embodiment. FIG. 2 is a block diagram of an internal configuration of a control unit of the power converter of this embodiment.

As shown in FIG. 1(a), a power converter 1 of this embodiment is connected to a DC power supply 20, and converts an input DC voltage v_dc to a three-phase AC voltage v_ac, and outputs an AC power to a power system 22 via a three-phase transformer 21.

The power converter 1 is connected in parallel to the DC power supply 20, and includes: capacitors 2a and 2b that are connected in series with each other, and divide the input DC voltage v_dc to generate a neutral potential; U-phase, V-phase, and W-phase legs 3 that are connected in parallel to the DC power supply 20, each including chopper cells C being unit converters that convert DC from the DC power supply 20 to AC; and a control unit 5 that controls circulating currents that flow through the legs 3 of the respective phases such that balances among output voltages from the chopper cells C of the legs 3 are maintained.

Note that, the configuration of the power converter is common for the U-phase, the V-phase, and the W-phase. Therefore, as appropriate, the U-phase is representatively described. Furthermore, the following description is made on the premise that currents and voltages are detected by an unillustrated current detector and voltage detector, and that values detected can be input to the control unit 5.

In the power converter 1, for example, when a U-phase AC voltage is positive, and a V-phase AC voltage and a W-phase AC voltage are negative, in the U-phase leg 3, switches 31 and 33 are turned on to form a path that goes through a DC positive terminal, the switch 31, a chopper-cell group circuit 35, a chopper-cell group circuit 36, the switch 33, and a DC neutral point N, and a U-phase circulating current that keeps the voltages of the chopper cells C in the chopper-cell group circuits 35 and 36 constant is supplied from the capacitor 2a. In the V-phase leg 3 and the W-phase leg 3, switches 32 and 34 are turned on to form a path that goes through the DC neutral point N, the switch 32, the chopper-cell group circuit 35, the chopper-cell group circuit 36, the switch 34, and a DC negative terminal. Thus, a V-phase circulating current and a W-phase circulating current that keep the voltages of the chopper cells C in the chopper-cell group circuits 35 and 36 constant are supplied from the capacitor 2b.

In this embodiment, the control unit 5 controls the capacitors 2a and 2b such that a neutral current that keeps the neutral potential constant is superimposed on the circulating currents for the respective phases. Therefore, a potential at the DC neutral point N is kept constant. For example, when a voltage of the capacitor 2a is higher than a voltage of the capacitor 2b, in order to maintain a balance therebetween, that is, to discharge surplus power of the capacitor 2a with the high voltage, a neutral current i is superimposed and caused to flow through the U-phase leg 3. Meanwhile, in the V-phase leg 3 and the W-phase leg 3, - (1/2) i is superimposed such that the neutral current i, which corresponds to the surplus, is charged to the capacitor 2b with the low voltage. In this way, the balance between the capacitors 2a and 2b is maintained, and the neutral potential is kept constant.

### [1-2. Details of Configuration]

### [Capacitor]

The capacitors 2a and 2b are DC capacitors, and are connected in series with each other and arranged in parallel between the positive terminal and the negative terminal of the DC power supply 20. The DC neutral point N is formed between both the capacitors 2a and 2b. In this embodiment, a reference potential is defined as the potential at the DC neutral point N that is formed by dividing the input DC voltage v_dc by the capacitors 2a and 2b. The neutral potential is substantially 1/2 of the input DC voltage v_dc. With respect to the DC neutral point N, the capacitor 2a may sometimes be referred to as a positive capacitor 2a, and the capacitor 2b may sometimes be referred to as a negative capacitor 2b. Note that, the capacitors 2a and 2b has lower capacity than capacitors of the chopper cells C described below.

### [Leg]

The legs 3 of the respective phases are connected in parallel to the DC power supply 20. All the legs 3 have the same configuration, and hence a configuration of the U-phase leg 3 is described as an example. The U-phase leg 3 includes the switches 31 to 34, the chopper-cell group circuits 35 and 36 each including the chopper cells C that convert DC to AC, and reactors 37 and 38.

### (Switch)

The switches 31 to 34 are reverse conducting switches each including a switching element with self-extinguishing properties, such as an IGBT and a MOSFET, to cause a current to flow in one direction when turned on, and a feedback diode connected in antiparallel to the switching element. The switches 31 to 34 have resistance voltages that are determined based on the input DC voltage v_dc from the DC power supply 20. An element used is determined by considering a switching surge voltage to be superimposed on a voltage of v_dc/2 with respect to the input DC voltage v_dc. When the DC voltage is several ten kV or more, it is difficult to secure a sufficient resistance voltage with a single device. Therefore, a plurality of elements are needed to be connected in series. The switches of this embodiment, which are referred to as the switches 31 to 34, include a single device, but may include a plurality of elements in series.

The switches 31 to 34 are connected in series in this order between the DC positive terminal and the DC negative terminal. A collector (C) of the switch 31 is connected to the DC positive terminal, and an emitter (E) of the switch 34 is connected to the DC negative terminal. An emitter (E) of the switch 32 and a collector (C) of the switch 33 are connected to the DC neutral point N divided by the capacitors 2a and 2b. By turning on/off the switches 31 to 34, the paths for the DC circulating currents are formed.

### (Chopper-Cell Group Circuit)

The chopper-cell group circuits 35 and 36 each include N (N≥1) chopper cells C connected in series, and the chopper cells C are used as the unit converters to convert the DC voltage to a estepwise AC voltage. As shown in FIG. 1(b), the chopper cell C includes a leg in which switches sw_ch1 and sw_ch2connected in series, and the DC capacitor c_ch, connected in parallel. A configuration of the switches sw_ch1 and sw_ch2 is the same as the configuration of the switches 31 to 34 described above. The chopper cell C outputs a voltage v_ch from the DC capacitor c_ch when the switch sw_ch1 is turned on, and outputs zero voltage when the switch sw_ch2 is turned on. The number of the chopper cells C in the chopper-cell group circuits 35 and 36 is determined based on the input DC voltage v_dc and the chopper-cell capacitor voltage v_ch, and is substantially (v_dc/2)/v_ch. In this embodiment, the number of the chopper cells C is set to three.

A positive terminal of the chopper-cell group circuit 35 is connected to a collector (C) of the switch 32, and a negative terminal of the chopper-cell group circuit 36 is connected to an emitter (E) of the switch 33. Furthermore, a negative terminal of the chopper-cell group circuit 35 is connected to an output AC voltage terminal via the reactor 37, and a positive terminal of the chopper-cell group circuit 36 is connected to the output AC voltage terminal via the reactor 38.

Note that, the chopper-cell group circuit 35 is a arm connected to a positive side when viewed from the DC side, which may sometimes be referred to as an upper arm. Furthermore, the chopper-cell group circuit 36 is a negative arm connected to a negative side when viewed from the DC side, which may sometimes be referred to as a lower arm.

### (Reactor)

When the power converter 1 is activated, in a case an output AC voltage v_ac_u is positive, the switches 31 and 33 are turned on, and a total voltage v_up+v_un obtained by summing an output voltage v_up from the chopper-cell group circuit 35 and an output voltage v_un from the chopper-cell group circuit 36, and a voltage v_dc_p from the capacitor 2a are short-circuited via the switching devices 31 and 33. Furthermore, in a case the output AC voltage v_ac_u is negative, the switches 32 and 34 are turned on, and the total voltage v_up+v_un and a voltage v_dc_n from the capacitor 2b are short-circuited via the switching devices 32 and 34.

In order to nsuppress a current increase at this time, the reactor 37 is inserted between the chopper-cell group circuit 35 and the output AC voltage terminal 39, and the reactor 38 is inserted between the chopper-cell group circuit 36 and the output AC voltage terminal 39.

### [Control Unit]

The control unit 5 controls the circulating currents to be caused to flow through the legs 3 of the respective phases so as to keep he output voltages from the chopper cells C constant. Therefore, the control unit 5 outputs commands to turn on or off the switches 31 to 34 of each of the legs 3 of the respective phases, and the switches sw_ch1 and sw_ch2 of each of the chopper cells C. As shown in FIG. 2, the control unit 5 includes a respective-phase output-voltage control unit 51, a respective-phase capacitor-voltage-balance control unit 52, a neutral-potential control unit 53, an inter-arm capacitor-voltage-balance control unit 54, a circulating-current ACR unit 55, a chopper-cell-group output-voltage-command-value generating unit 56, and an individual-capacitor-voltage-balance control unit 57. Functions of those units are exerted, for example, by processes of software of a computer with a CPU, etc.

### (Control Operation)

In below, control operations of the units 51 to 57 and control configurations thereof are collectively described.

The respective-phase output-voltage control unit 51 calculates voltage command values v_u*, v_v*, and v_w* for the respective phases from output AC currents i_u, i_v, and i_w in the respective phases. That is, the respective-phase output-voltage control unit 51 includes a three-phase/DQ conversion unit 511, an ACR unit 512, and a DQ/three-phase conversion unit 513. Description thereof is made of the U-phase as an example. In the respective-phase output-voltage control unit 51, a detected U-phase upper-arm current i_up and a detected U-phase lower-arm current i_un are input, and the U-phase current i_u is calculated by i_up-i_un. Similarly, i_v and i_w are calculated. Then, the three-phase/DQ conversion unit 511 performs three-phase/DQ conversion on the calculated i_u, i_v, and i_w, calculates a D-axis-current i_d and a Q-axis current i_q, and outputs those currents to the ACR unit 512.

The ACR unit 512 receives the D-axis current i_d and the Q-axis current i_q, and a D-axis current command value i_d* and a Q-axis current command value i_q*, performs a PI control on the D-axis current i_d and the Q-axis current i_q to follow the D-axis current command value i_d* and the Q-axis current command value i_q*, and calculates and outputs a D-axis voltage command value v_d* and a Q-axis voltage command value v_q* to the DQ/three-phase conversion unit 513. Then, in the DQ/three-phase conversion unit 513, the input D-axis voltage command value v_d* and the input Q-axis voltage command value v_q* are subjected to DQ/three-phase conversion so as to calculate the voltage command values v_u*, v_v*, and v_w* for the respective phases.

The respective-phase capacitor-voltage-balance control unit 52 performs a control to keep an average value of the voltages of the chopper-cell group circuits 35 and 36 of the respective phases constant. This control is described by the U-phase as an example. When the output AC voltage v_ac_u is higher than the DC neutral voltage, the switches 31 and 33 are turned on to cause the DC circulating current to flow through the path constituted by the DC positive terminal, the switch 31, the chopper-cell group circuit 35, the chopper-cell group circuit 36, the switch 33, and the DC neutral point N. Meanwhile, when the output AC voltage v_ac_u is lower than the DC neutral voltage, the switches 32 and 34 are turned on to cause the DC circulating current to flow through the path constituted by the DC neutral point N, the switch 32, the chopper-cell group circuit 35, the chopper-cell group circuit 36, the switch 34, and the DC negative terminal.

In order to perform such control operation, the respective-phase capacitor-voltage-balance control unit 52 calculates an average value v_ch_u (=(v_up+v_un)/2) of the voltages v_up and v_un of the chopper-cell group circuits 35 and 36 in the U-phase leg 3, performs the PI control to follow a desired command value, and calculates a circulating-current command value i_c_u0* by. The same control is also performed to the V-phase and the W-phase. The respective-phase capacitor-voltage-balance control unit 52 outputs obtained circulating-current command values i_c_u0*, i_c_v0*, and i_c_w0* for the respective phases to the neutral-potential control unit 53.

The neutral-potential control unit 53 performs a control to keep the neutral potential at the DC neutral point N constant. Generally, capacitors and switching elements have individual differences, and hence a charge/discharge current from the positive capacitor 2a and the negative capacitor 2b varies in practice. Therefore, the neutral voltage is not maintained to exactly 1/2 of the input DC voltage v_dc. As a countermeasure, in this embodiment, a current i_np is intentionally caused to flow into the neutral potential such that the neutral voltage is kept constant. For this purpose, in this embodiment, a neutral-current command value i_np* is superimposed on the DC circulating currents for the respective phases.

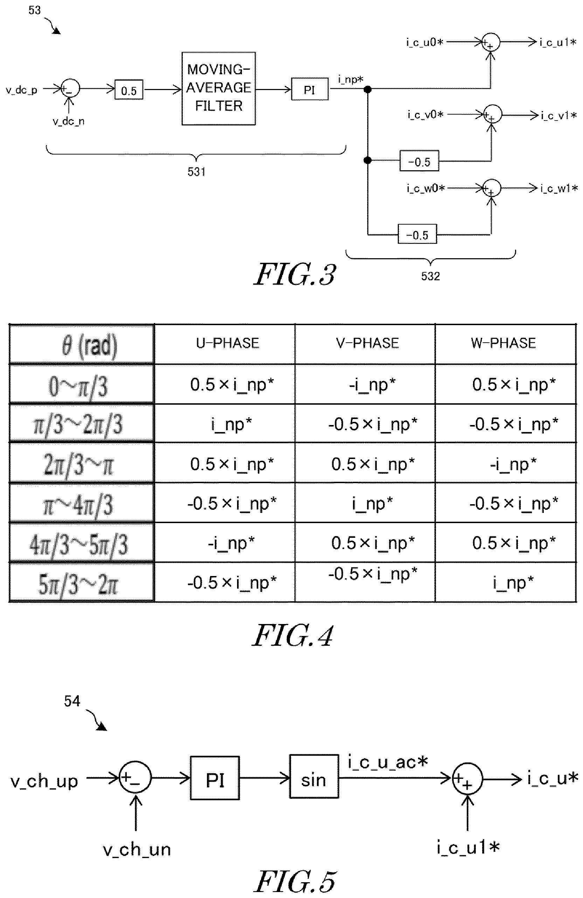

More specifically, as shown in FIG. 3, the neutral-potential control unit 53 includes a neutral-current-command-value calculation unit 531 and a neutral-current superimposing unit 532. The neutral-current-command-value calculation unit 531, receives the voltage v_dc_p from the capacitor 2a and the voltage v_dc_n from the capacitor 2b input, calculates a difference voltage therebetween, and multiplies by 1/2. In addition, the difference voltage is filtered by a moving-average filter,has the PI control performed to follow zero, and the neutral-current command value i_np* is calculated.

When, for example, the voltage v_dc_p from the capacitor 2a increases, the voltage v_dc_n from the capacitor 2b decreases in accordance therewith. In order to accurately obtain the increase, the difference voltage is multiplied by 1/2.

The moving-average filter is arranged to eliminate influences on the control. That is, in the three-phase NPC-MMC, the neutral potential fluctuates at the frequency three times as high as the AC voltage frequency, because the currents supplied from the positive capacitor 2a and the negative capacitor 2b fluctuate at a frequency three times as high as an AC voltage frequency. Such harmonic components are contained in the voltage difference between the capacitors 2a and 2b. In order to eliminate influence on control of hunting, etc., the moving average is calculated.

The influence on the control can be further eliminated by setting a period of the moving average to a product obtained by multiplying a period of the output AC voltage by the number of the legs (in this case, three),. Furthermore, instead of the moving-average filter, alow-pass filter may be used to remove the harmonic components. In addition, even without those filters, by increasing a gain at the time of the PI control to increase PI-control responsivity, fluctuation at the triple frequency in the capacitor 2a and the capacitor 2b can be suppressed. The increase in gain means, for example, setting the gain higher than a gain to be used in PI control in the case of inserting at least one of the filters.

The neutral-current superimposing unit 532 superimposes the neutral-current command value i_np* obtained from the neutral-current-command-value calculation unit 531 on the circulating-current command values for the respective phases. This method is described by an example of a case where a phase θ of the U-phase AC voltage ranges from n/3 to 2n/3. In this case, the U-phase AC voltage is positive, and the V-phase and the W-phase AC voltages are negative. Therefore, the U-phase circulating current is supplied from the positive capacitor 2a, and the V-phase and the W-phase circulating currents are supplied from the negative capacitor 2b.

In order to reflect the neutral-current command value i_np* to the circulating currents supplied from the capacitors 2a and 2b, i_np* is added to the U-phase circulating-current command value i_c_u0*, and i_np*/2 is distributed to and subtracted from the V-phase and the W-phase circulating-current command values i_c_v0* and i_c_w0*. In this way, circulating-current command values i_c_u1*, i_c_v1*, and i_c_w1* for the respective phases, which are used for keeping the neutral potential constant, are calculated.

Also in cases where the phase θ of the U-phase AC voltage does not range from n/3 to 2n/3, the neutral-current command value i_np* is superimposed by the same method. Superimposition amounts in those cases are shown in FIG. 4. That is, when two of the three phases are positive and one is negative, i_np*/2 is added to the two positive phases, and -i_np* is added to the negative phase. When one of the phases is positive and two of the phases are negative, i_np* is added to the positive phase, and -i_np*/2 is added to the two negative phases. Note that, a sum of the neutral-current command values for the three phases is zero.

Note that, also in a case of a two-phase power converter, the neutral voltage can be kept constant by the same control method.

The neutral-potential control unit 53 outputs the obtained circulating-current command values i_c_u1*, i_c_v1*, and i_c_w1* for the respective phases, which are used for keeping the neutral potential constant, to the inter-arm capacitor-voltage-balance control unit 54.

The inter-arm capacitor-voltage-balance control unit 54 equalizes a capacitor-voltage average value v_ch_up of the chopper-cell group circuit 35 and a capacitor-voltage average value v_ch_un of the chopper-cell group circuit 36. For this purpose, when the output AC voltage is higher than the DC neutral voltage, an AC circulating current with the same frequency as that of the output AC voltage is caused to flow through the path constituted by the DC positive terminal, the switch 31, the chopper-cell group circuit 35, the chopper-cell group circuit 36, the switch 33, and the DC neutral point N. When the output AC voltage is lower than the DC neutral voltage, the AC circulating current with the same frequency as that of the output AC voltage is caused to flow through the path constituted by the DC neutral point N, the switch 32, the chopper-cell group circuit 35, the chopper-cell group circuit 36, the switch 34, and the DC negative terminal.

That is, as shown in FIG. 5, the inter-arm capacitor-voltage-balance control unit 54 receives the capacitor-voltage average value v_ch_up of the upper arm 35 and the capacitor-voltage average value v_ch_un of the lower arm 36 input, and obtains an AC circulating-current command value i_c_ac* that is an value gained by subtracting v_ch_un from v_ch_up, performing a proportional-integral control on a difference thereof, and substituting a gained value to a sine function. This resultant value is added to the U-phase circulating-current command value i_c_u1* for keeping constant the neutral potentialto calculate a U-phase circulating-current command value i_c_u*. Therefore, the U-phase circulating-current command value i_c_u* is equal to a sum of the DC circulating current and the AC circulating current. The inter-arm capacitor-voltage-balance control unit 54 similarly calculates circulating-current command values for the V-phase and the W-phase, and outputs those calculated circulating-current command values i_c_u*, i_c_v*, and i_c_w* for the respective phases to the circulating-current ACR unit 55.

The circulating-current ACR unit 55 performs a proportional-integral control on the input U-phase circulating-current command value i_c_u* to make follow the U-phase circulating current i_c_un, and generates a U-phase circulating-voltage command value v_c_u* The circulating-current ACR unit 55 similarly generates circulating-voltage command values for the V-phase and the W-phase, and outputs those circulating-voltage command values v_c_u*, v_c_v*, and v_c_w* for the respective phases to the chopper-cell-group output-voltage-command-value generating unit 56.

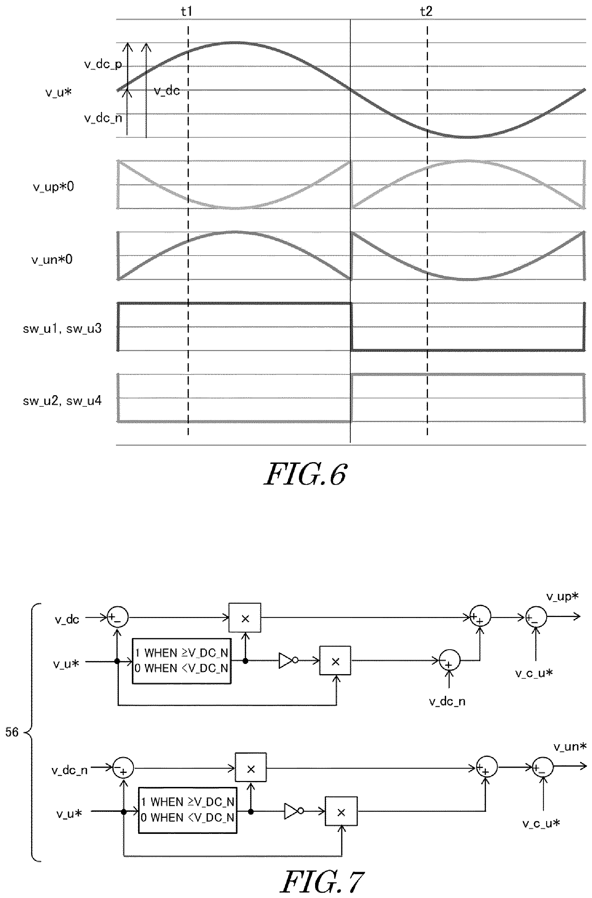

Next, the chopper-cell-group output-voltage-command-value generating unit 56 generates voltage command values output from the chopper-cell group circuits 35 and 36. Description thereof is made with reference to FIG. 6 by an example of the U-phase. At the timing t1 shown in FIG. 6, when the AC voltage command value v_u* is larger than the DC neutral voltage v_dc_n, the switches 31 and 33 are turned on, and the switches 32 and 34 are turned off. The chopper-cell group circuit 35 output a difference voltage between the input DC voltage v_dc and the output AC voltage v_ac_u, and the chopper-cell group circuit 36 outputs a difference voltage between the output AC voltage v_ac_u and the DC neutral voltage v_dc_n. At a timing t2 shown in FIG. 6, when the AC voltage command value v_u* is smaller than the DC neutral voltage v_dc_n, the switches 32 and 34 are turned on, and the switches 31 and 33 are turned off. The chopper-cell group circuit 35 output a difference voltage between the DC neutral voltage v_dc_n and the output AC voltage v_ac_u, and the chopper-cell group circuit 36 outputs a difference voltage between the output AC voltage v_ac_u and a DC negative voltage.

Those difference voltages are obtained by the chopper-cell-group output-voltage-command-value generating unit 56 shown in FIG. 7. A U-phase upper-arm voltage command value v_up* is calculated by v_up*=v_dc-v_u*-v_c_u* when the AC voltage command value v_u* is equal to or larger than the DC neutral voltage v_dc_n, and is calculated by v_up*=v_dc_n-v_u*-v_c_u* when the AC voltage command value v_u* is smaller than the DC neutral voltage v_dc_n. A U-phase lower-arm voltage command value v_un* is calculated by v_un*=v_u*-v_dc_n-v_c_u* when the AC voltage command value v_u* is equal to or larger than the DC neutral voltage v_dc_n, and is calculated by v_un*=v_u*-v_c_u* when the AC voltage command value v_u* is smaller than the DC neutral voltage v_dc_n.

The individual-capacitor-voltage-balance control unit 57 performs adjustment to equalize the output voltages from the chopper cells C of the chopper-cell group circuits 35 and 36. That is, when the U-phase upper-arm current i_up is positive, the capacitors are charged, and hence control is performed to increase the output voltage from the chopper cell C with a low capacitor voltage, and decrease the output voltage from the chopper cell C with a high capacitor voltage. In addition, when the U-phase upper-arm current i_up is negative, the capacitors are discharged, and hence control is performed to decrease output voltage from the chopper cell C with the low capacitor voltage is reduced, and increase the output voltage from the chopper cell C with the high capacitor voltage.

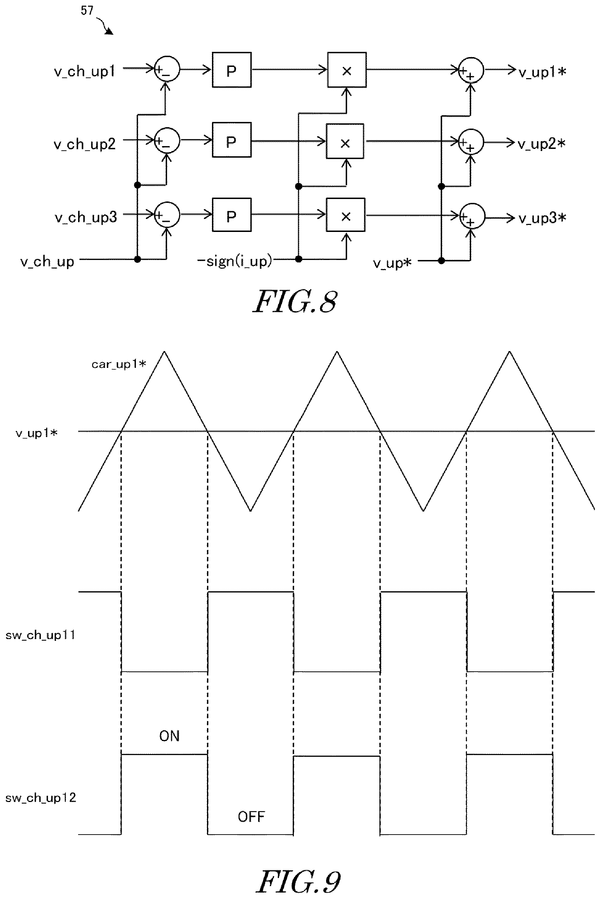

How the individual-capacitor-voltage-balance control unit 57 performs such a control operation is described by an example of the chopper-cell group circuit 35 of the U-phase. As shown in FIG. 8, the capacitor-voltage average value v_ch_up of the chopper-cell group circuit 35 is subtracted from a capacitor voltage v_ch_up1, and the difference is multiplied by a proportional gain. Then, the product is multiplied by a value -sign (i_up) that is obtained by inverting a sign of the U-phase upper-arm current i_up, and the U-phase upper-arm voltage command value v_up* is added thereto. In this way, voltage command values v_up1*, v_up2*, and v_up3* for the chopper cells are calculated.

Next, a method of outputting the voltages from the chopper cells C is described. This method is applicable to all the chopper cells C, and hence description is made with reference to FIG. 9 by an example of a chopper cell ch_up1. Note that, two switches of the chopper cell ch_up1 are denoted by sw_ch_up11 and sw_ch_up12.

In order to output the output-voltage command value v_up1* for the chopper cell ch_up1, this output-voltage command value v_up1* is compared with a carrier triangular wave car_up1. When the output-voltage command value v_up1* is larger than the carrier triangular wave car_up1, the switch sw_ch_up11 is turned on, and sw_ch_up12 is turned off. When the output-voltage command value v_up1* is smaller than the carrier triangular wave car_up1, the switch sw_ch_up11 is turned off, and sw_ch_up12 is turned on.

When the chopper-cell group circuit 35 includes N chopper cells, by shifting a phase of the carrier triangular wave by each 360 degrees/N, an equivalent carrier frequency can be increased to N times as high as a frequency of the carrier triangular wave, and the switches are more finely turned on/off. Therefore, a harmonic voltage in the output AC voltage can be reduced, and the output AC voltage can be smoothed. In addition, by equalizing a carrier-triangular-wave phase for the chopper-cell group circuit 36 to that for the chopper-cell group circuit 35, the harmonic voltage in the output AC voltage can be further reduced.

### [1-3. Effect]

(1) The power converter 1 of this embodiment is a power converter that converts power between AC and DC, which includes: the capacitors 2a and 2b that are connected in series, connected in parallel to the DC power supply 20, to generate a neutral potential by dividing an input DC voltage from the DC power supply 20; the plurality of legs 3 that are connected in parallel to the DC power supply 20, each including the chopper cells C that convert the DC to the AC; and the control unit 5 that controls the circulating currents to be caused to flow through the legs 3 of the respective phases so as to maintain the balances among the output voltages from the chopper cells of the legs 3 of the respective phases. The control unit 5 includes the neutral-potential control unit 53 that superimposes the neutral current, which is for keeping the neutral potential constant, on the DC circulating currents to be caused to flow between DC terminals of each of the phases. The neutral-potential control unit 53 causes at least any of the capacitors 2a and 2b to cause the circulating currents with the neutral current superimposed thereon to flow.
   With this, a neutral-point-clamped power converter capable of keeping the neutral potential constant can be provided. Furthermore, in order to keep the neutral potential constant, a method of applying a zero-phase voltage is also conceived. However, in this case, a control responsivity depends on the frequency of the output AC voltage. As a result, the neutral potential is largely fluctuated, and the capacity of the DC capacitors may be increased. In contrast, according to this embodiment, the neutral current can be caused to flow at any timing in a single period. Therefore, the control responsivity does not depend on the frequency of the output AC voltage.
   Furthermore, the legs 3 each include the switches 31 to 34 connected in multiple series, and the pair of chopper-cell group circuits 35 and 36, which one or two or more of the chopper cells C are connected in series. The switches 31 to 34 are arranged in this order between the DC positive terminal and the DC negative terminal connected to the DC power supply 20, and are connected to the DC neutral point N between the switch 32 and the switch 33. The pair of chopper-cell group circuits 35 and 36 are connected in parallel to the switches 32 and 33. With this, the number of the chopper cells can be reduced to half of that of conventional MMCs. Therefore, the power converter can be downsized. In addition, the capacity of the DC capacitors is lower than the capacity of the capacitor of the chopper cells. Therefore, the power converter can be downsized. Furthermore, as a result of reducing the number of the chopper cells, switching loss can be reduced, and conversion efficiency can be improved.
(2) The neutral-potential control unit 53 causes one of the capacitors 2a and 2b, the one with a high voltage, to discharge power so as to charge another of the capacitors 2a and 2b, the other with a low voltage. With this, the control to keep the neutral potential constant can be easily performed. For example, when the positive capacitor 2a has the high voltage, and when the negative capacitor 2b has the low voltage, a discharge current from the positive capacitor 2a is charged to the negative capacitor 2b via the legs 3 of the other two phases, and the balance between the capacitors 2a and 2b is maintained. Thus, when both the capacitors 2a and 2b are controlled, the neutral potential can be more easily kept constant.
(3) The neutral-potential control unit 53 distributes and superimposes the neutral current on the legs 3 of the respective phases. With this, the neutral current to be superimposed can be distributed to the legs 3 of the respective phases. Therefore, loads such as a thermal load due to the increase in current flowing through the switches 31 to 34 can be reduced. As an example of a method that does not include the distribution and the superimposition, there may be given a method of causing the neutral current to flow only through the U-phase leg 3 and not through the legs 3 of the V-phase and the W-phase, and causing the positive capacitor 2a to discharge so as to charge the capacitors in the chopper-cell group circuit 35. In this case, since the neutral current is superimposed only on the U-phase, the thermal load on the switches 31 to 34 in the U-phase leg 3 increases. In contrast, according to the method of this embodiment, such load can be dispersed to the legs 3 of the respective phases.
(4) The neutral-potential control unit 53 calculates the neutral-current command value i_np* through proportional-integral control on the voltage difference between the capacitors 2a and 2b. With this, the voltages of the capacitors 2a and 2b can be equalized, and the control to keep the neutral potential constant can be performed.
(5) The neutral-potential control unit 53 includes the low-pass filter that removes high-frequency components contained in the voltage difference between the capacitors 2a and 2b. With this, the neutral-current command value can be stably generated. Therefore, the influence of the high-frequency components on the control can be eliminated.
(6) The neutral-potential control unit 53 includes the moving-average filter that removes the high-frequency components contained in the voltage difference between the capacitors 2a and 2b. With this, the neutral-current command value can be stably generated. Therefore, the influence of the high-frequency components on the control can be eliminated.
(7) The period of the moving average of the moving average filter is set to the product obtained by multiplying the period of the output AC voltage by the multiple the number of the legs. With this, the harmonic components at the frequency obtained by multiplying the period of the output AC voltage by the number of the legs can be removed from the voltage difference between the capacitors 2a and 2b for calculating the neutral-current command value. Therefore, the influence on the control can be efficiently eliminated.

### [2. Other Embodiments]

The plurality of embodiments of the present disclosure are described hereinabove, but those embodiments are merely presented as examples, and are not intended to limit the scope of the present disclosure. The embodiments as described hereinabove can be carried out in other various forms, and various omissions, replacements, and modifications may be made without departing from the scope of the present disclosure. Those embodiments and the modifications thereof are encompassed not only within the scope and the spirit of the present disclosure, but also within the scope of the appended claims and the equivalents thereof.

For example, the neutral potential, which is generated between the two capacitors 2a and 2b in the first embodiment, may be generated between positive capacitors connected in multiple series and negative capacitors connected in multiple series. With this, the resistance voltages can be increased. Furthermore, two or more capacitors may be connected in parallel to each of the capacitors 2a and 2b so as to increase the capacity of those capacitors.

Furthermore, the two capacitors 2a and 2b connected in series, which are connected to the legs 3 of the three phases in the first embodiment, may be connected in parallel directly to each of the legs 3 of the respective phases. With this, when the switches 31 to 34 are turned off, application of a surge voltage by parasitic inductance remaining between the legs of the respective phases can be prevented.

### REFERENCE SIGNS LIST

1 Power converter
2a, 2b Capacitor
20 DC power supply
21 Three-phase transformer tr
22 Power system V_S
3 Leg
31 to 34 Switch
35 Chopper-cell group circuit (upper arm)
36 Chopper-cell group circuit (lower arm)
37, 38 Reactor
39 Output AC voltage terminal
5 Control unit
51 Respective-phase output-voltage control unit
511 Three-phase/DQ conversion unit
512 ACR unit
513 DQ/three-phase conversion unit
52 Respective-phase capacitor-voltage-balance control unit
53 Neutral-potential control unit
531 Neutral-current-command-value calculation unit
532 Neutral-current superimposing unit
54 Inter-arm capacitor-voltage-balance control unit
55 Circulating-current ACR unit
56 Chopper-cell-group output-voltage-command-value generating unit
57 Individual-capacitor-voltage-balance control unit
C Chopper cell
N DC neutral point
sw_ch1, sw _h2 Switch of chopper cell
101 MMC
103 Leg
104a Upper arm
104b Lower arm
105 Leg
120 DC power supply
121 Three-phase transformer
122 Power system
139 AC output terminal

## Claims

1. A power converter that converts power between AC and DC, the power converter comprising:
a first capacitor and a second capacitor that are connected in series, connected in parallel to a DC power supply to generate a neutral potential by dividing an input DC voltage from the DC power supply;
a plurality of legs that are connected in parallel to the DC power supply, each comprising chopper cells that convert the DC to the AC; and
a control unit that controls circulating currents to be caused to flow through the legs of respective phases to maintain balances among output voltages from the chopper cells of the legs of the respective phases,
wherein:
the control unit comprises a neutral-potential control unit that superimposes a neutral current, for keeping the neutral potential constant, on the DC circulating currents to be caused to flow between DC terminals of each of the phases; and
the neutral-potential control unit makes the circulating current with the neutral current superimposed thereon to flow in at least one of the first and the second capacitor.

2. The power converter according to claim 1, wherein the neutral-potential control unit causes one of the first capacitor and the second capacitor, the one with a high voltage, to discharge power so as to charge another of the first capacitor and the second capacitor, the other with a low voltage.

3. The power converter according to claim 1 or 2, wherein the neutral-potential control unit distributes and superimposes the neutral current on the legs of the respective phases.

4. The power converter according to any one of claims 1 to 3, wherein the neutral-potential control unit calculates a command value for the neutral current through by perfoming a proportional-integral control on a voltage difference between the first capacitor and the second capacitor.

5. The power converter according to any one of claims 1 to 4, wherein the neutral-potential control unit comprises a low-pass filter that removes high-frequency components contained in the voltage difference between the first capacitor and the second capacitor.

6. The power converter according to any one of claims 1 to 4, wherein the neutral-potential control unit comprises a moving-average filter that removes high-frequency components contained in the voltage difference between the first capacitor and the second capacitor.

7. The power converter according to claim 6, wherein a period of a moving average of the moving average filter is set to a product obtained by multiplying a period of an output AC voltage by the number of the legs.

8. The power converter according to any one of claims 1 to 7, wherein:
the legs each comprise
a first switch, a second switch, a third switch, and a fourth switch connected in multiple series, and
a pair of chopper-cell group circuits in which one or two or more of the chopper cells are connected in series;
the first switch, the second switch, the third switch, and the fourth switch
are arranged in this order between a DC positive terminal and a DC negative terminal connected to the DC power supply, and
are connected to a neutral point between the second switch and the third switch; and
the pair of chopper-cell group circuits are connected in parallel to the second switch and the third switch.
